(19) Europäisches Patentamt
European Patent Office
Office européen des brevets

(11) **EP 2 002 533 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **07704665.4**

(22) Anmeldetag: **21.02.2007**

(51) Int Cl.:
***H02M 7/797*** *(2006.01)*    ***H02M 1/42*** *(2007.01)*

(86) Internationale Anmeldenummer:
**PCT/EP2007/051636**

(87) Internationale Veröffentlichungsnummer:
**WO 2007/113051 (11.10.2007 Gazette 2007/41)**

(54) **VERFAHREN ZUR VERRINGERUNG DES BLINDLEISTUNGSBEDARFS EINES GRUNDFREQUENT GETAKTETEN NETZSEITIGEN STROMRICHTERS IM LEERLAUF SOWIE BEI GERINGER MOTORISCHER BELASTUNG**

METHOD FOR REDUCING THE IDLE CURRENT REQUIREMENT OF A BASE FREQUENCY CLOCKED SUPPLY SIDE CONVERTER ON IDLE AND WITH LOW MOTOR LOADS

PROCÉDÉ DE RÉDUCTION DES BESOINS EN PUISSANCE RÉACTIVE D'UN REDRESSEUR DE COURANT COTÉ RÉSEAU CADENCÉ AVEC FRÉQUENCE DE BASE EN MARCHE À VIDE ET À FAIBLE CHARGE MOTEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.03.2006 DE 102006015031**

(43) Veröffentlichungstag der Anmeldung:
**17.12.2008 Patentblatt 2008/51**

(73) Patentinhaber: **Siemens Aktiengesellschaft 80333 München (DE)**

(72) Erfinder: **BENESCH, Norbert 90562 Heroldsberg (DE)**

(56) Entgegenhaltungen:
**WO-A-99/17435        DE-A1- 4 208 114
DE-C1- 19 617 048**

EP 2 002 533 B1

**Beschreibung**

Die Erfindung betrifft ein Verfahren zur Verringerung des Blindleistungsbedarfs eines grundfrequent getakteten netzseitigen Stromrichters im Leerlauf sowie bei geringer motorischer Belastung, gemäß dem Oberbegriff des Anspruchs 1.

Elektrische Anlagen, welche aus Sicht des Drehstromnetzes zeitweise als Verbraucher und zeitweise als Generator arbeiten, werden üblicherweise über einen so genannten Zwischenkreis an das Drehstromnetz angeschlossen. Ein Beispiel für eine solche elektrische Anlage ist eine Zentrifuge in einer Zuckerfabrik. Ebenso sind insbesondere nur zeitweilig betriebene Anlagen zur dezentralen elektrischen Energieerzeugung, wie etwa kleinere Windkraft- oder Solaranlagen über einen Zwischenkreis an das Drehstromnetz angeschlossen.

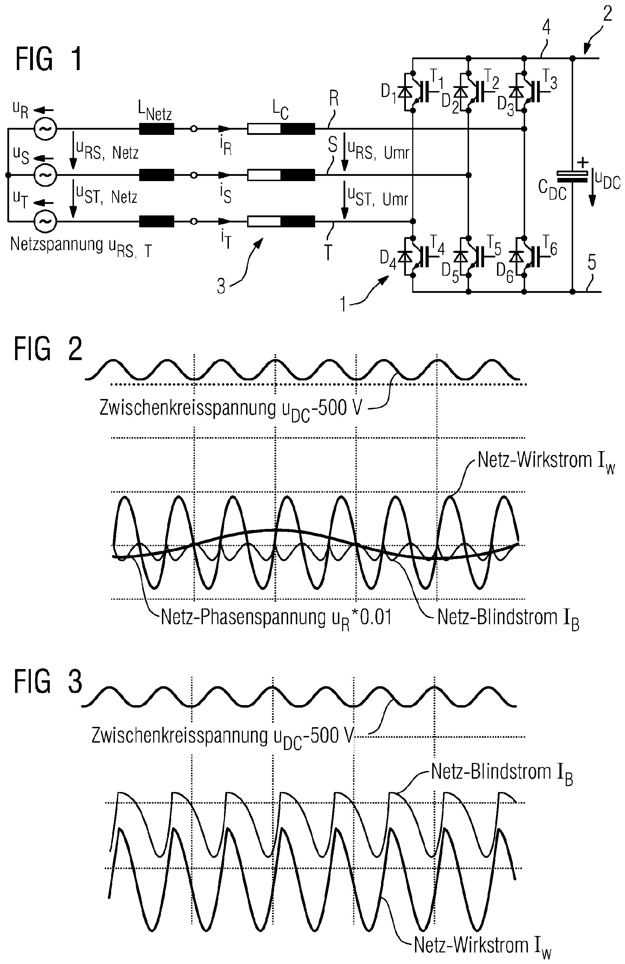

In FIG 1 ist skizzenartig der Aufbau sowie der Anschluss eines bekannten Stromrichters 1 zur Regelung eines Zwischenkreises 2 an ein Drehstromnetz 3 dargestellt. Der Stromrichter 1 umfasst mehrere beispielsweise als Transistoren oder Thyristoren ausgeführte Halbleiterschalter $T_1$, ..., $T_6$, welche jeweils zwischen einer Leitung R, S, T des Drehstromnetzes 3 sowie einer Leitung 4, 5 des Zwischenkreises 2 angeordnet sind. Die Leitungen R, S, T des Drehstromnetzes werden auch als Strang R, S, T bezeichnet. Die in FIG 1 dargestellte Anordnung der sechs Halbleiterschalter $T_1$, ..., $T_6$ wird als sechspulsige Brückenschaltung, kurz B6-Brücke bezeichnet. Anstelle der Bezeichnung sechspulsig ist auch die Bezeichnung dreiphasig üblich. Am Zwischenkreis 2 liegt eine Zwischenkreisspannung $u_{DC}$ an. Die Zwischenkreisspannung $u_{DC}$ ist eine Gleichspannung. Zur Pufferung und Glättung der Gleichspannung ist zwischen den Leitungen 4, 5 unterschiedlichen elektrischen Potentials eine Zwischenkreiskapazität $C_{DC}$ angeordnet.

In den einzelnen Leitungen 4, 5, 6 sind zwischen Drehstromnetz 3 und Zwischenkreis 2 Kommutierungsdrosseln $L_C$ angeordnet.

Die Schaltflanken der Halbleiterschalter liegen im grundfrequenten Betrieb bei den natürlichen Zündzeitpunkten, also den Schnittpunkten der Netzspannungen $u_{R,S,T}$ der einzelnen Leitungen R, S, T des Drehstromnetzes 2.

Der grundfrequent getaktete Betrieb von Stromrichtern zeichnet sich durch einige Vorteile aus, welche ihren Einsatz sinnvoll machen. Da kein hochfrequentes Takten der auch als Stromventile bezeichenbaren Halbleiterschalter erfolgt, ergeben sich beispielsweise geringe Schaltverluste, die Möglichkeit einer Verwendung einfacher und kostengünstiger Kommutierungsdrosseln und Netzfilter, geringe Anregung von Systemschwingungen, die beispielsweise zu hohen Motorlagerströmen führen können.

Zudem ist die Zwischenkreisspannung $u_{dc}$ geringer als bei einem geregelten Betrieb mit einem Hochsetzsteller. Die Einhaltung von $u_{dc}$-Grenzen ist z.B. für die Isolation von am Zwischenkreis angeschlossenen Motoren wichtig.

Ein erheblicher Nachteil des grundfrequent getakteten Betriebs ist allerdings, dass bei Leerlauf bzw. bei schwacher Belastung des Stromrichters ein relativ großer Blindleistungsbedarf entsteht und ein hoher Pendelstrom auftritt. Die Strom- und Spannungsverläufe für einen solchen Fall sind schematisch in FIG 2 dargestellt. Dies führt zu einer Belastung des Stromnetzes beim Anwender und zu einem scheinbar höheren Stromverbrauch verbunden mit den sich daraus ergebenden Nachteilen in Bezug auf die Energiekosten.

Eine Behebung dieses Nachteils wird bislang zum Einen durch Verwendung großer Kommutierungsinduktivitäten $L_C$ gelöst, verbunden mit hohen Kosten für die Kommutierungsinduktivitäten $L_C$ sowie einem hohen Spannungsabfall in den Kommutierungsinduktivitäten $L_C$. Zum Anderen wird eine kleine Zwischenkreiskapazität $C_{DC}$ verwendet, verbunden mit einer geringen oder gar fehlenden Pufferwirkung, wodurch ein Anschließen beispielsweise großer Mehrachsantriebe an den Zwischenkreis nicht möglich ist.

Kommen weder große Kommutierungsinduktivitäten, noch kleine Zwischenkreiskapazitäten in Frage, muss der Anwender bislang den hohen Scheinleistungsbedarf in Verbindung mit den dadurch anfallenden hohen Kosten akzeptieren.

Die WO 99/17435 A lehrt einen mittels Thyristoren phasengesteuerten Spannungsquellenumrichter mit bidirektionalem Leistungsfluss. Der Umrichter hat den gleichen Aufbau wie ein pulsbreitenmodulierter Spannungsquellenumrichter, jedoch werden die Schaltelemente nicht mittels Pulsbreitenmodulation selbstgeführt betrieben sondern werden mittels netzgeführter Thyristoren einer Sechs-Puls-Phasensteuerung betrieben. Der Umrichter liefert DC-seitig einen bidirektional fließenden Strom, die DC-seitige Spannung kann auf ihren gewünschten Wert geregelt werden und der Anteil an Blindleistung sowie an Oberwellen ist für diesen Umrichter gering.

Als eine Aufgabe der Erfindung kann es deshalb angesehen werden, ein Verfahren anzugeben, mit dem der Blindleistungsbedarf eines grundfrequent getakteten Stromgleichrichters im Leerlauf bzw. bei schwacher motorischer Belastung verringert werden kann, mit dem Ziel, den Scheinleistungsbedarf bei Leerlauf zumindest annähernd auf Null abzusenken. Diese Aufgabe wird durch ein Verfahren nach Anspruch 1 bzw. durch einen Stromrichter nach Anspruch 9 gelöst. Vorteilhafte Weiterbildungen sind in den abhängigen Ansprüchen 2 bis 8 und 10 bis 11 definiert.

Die Nachteile des Standes der Technik werden bei einem erfindungsgemäßen Verfahren der eingangs genannten Gattung vermieden, indem die grundfrequente Taktung der Halbleiterschalter abhängig von der gewünschten Richtung des Leistungsflusses erfolgt.

Der Begriff grundfrequente Taktung umfasst eine Taktung der einzelnen Halbleiterschalter in einer solchen Art und Weise, dass diese jeweils in deren während der grundfrequenten Taktung vorgesehenen, individuellen Winkelbereichen, Segmenten oder dergleichen permanent, beispielsweise durch Ansteuerung mit einem Gleichstrom-Schaltsignal, oder zumindest überwiegend, beispielsweise durch Ansteuerung mit einem Hochfrequenz-Schaltsignal, angesteuert sind.

Zur Durchführung des erfindungsgemäßen Verfahrens wird vorzugsweise eine Stromrichterschaltung verwendet, die sowohl einen aktiven Ein-/Rückspeise-Leistungsfluss, als auch einen rein passiven Betrieb in eine Leitungsrichtung ermöglicht. Eine bevorzugte Schaltung ist eine IGBT-B6-Brücke (Insulated Gate Bipolar Transistor), die eine passive parallele DiodenBrücke beinhaltet.

Die für den Leistungsfluss vom Zwischenkreis in das Drehstromnetz vorzugsweise eingesetzten IGBTs werden erfindungsgemäß grundsätzlich nur noch dann angesteuert, wenn tatsächlich Wirkleistung in das Drehstromnetz eingespeist werden soll. Die grundfrequente Taktung der vorzugsweise als IGBTs ausgeführten Halbleiterschalter ist erfindungsgemäß somit abhängig von der gewünschten Richtung des Leistungsflusses.

Das erfindungsgemäße Verfahren weist gegenüber dem Stand der Technik folgende Vorteile auf:

- Energieeinsparung und damit Kosteneinsparung beim Anwender.
- Vorteilhafte Auswirkung auf die Dimensionierung des Netzanschlusses beim Anwender und damit eine Kosteneinsparung.
- Verbesserung der Akzeptanz des grundfrequenten Betriebs beim Anwender.
- Im Mittel verringerte thermische Belastung des Stromrichters und der Zusatzkomponenten.
- Keine Erhöhung der Schaltfrequenz der Halbleiterschalter für den Testsignal-Betrieb erforderlich.
- Kostengünstige Realisierung möglich, da im Vergleich zum Stand der Technik keine zusätzlichen Bauteile sowie kein zusätzlicher Fertigungsaufwand benötigt werden.

Darüber hinaus ist das erfindungsgemäße Verfahren kompatibel zur bisherigen Implementierung des grundfrequenten Betriebs.

Die Art der Ermittlung der gewünschten Richtung des Leistungsflusses und damit die genaue Ausprägung der Kriterien zur An- und Abschaltung der grundfrequenten Taktung ist abhängig von den verschiedenen Systemkomponenten.

Wird beispielsweise eine Sensorik für Netzspannung, Zwischenkreisspannung sowie Netz- und/oder Zwischenkreisstrom verwendet, so ist denkbar, dass erfindungsgemäße Verfahren wie folgt durchzuführen:

- kontinuierliche Messung der Netzspannungen $u_{R,S,T}$ eines mit dem Stromrichter verbundenen Drehstromnetzes,
- kontinuierliche Messung der Zwischenkreisspannung $u_{DC}$ eines mit dem Stromrichter verbundenen Zwischenkreises,
- kontinuierliche Bestimmung und Beobachtung mindestens einer verketteten Netzspannung $u_v$ anhand der gemessenen Netzspannungen $u_R$, $u_S$, $u_T$,
- kontinuierliche Bestimmung und Beobachtung eines Netz-Wirkstroms $I_w$, beispielsweise anhand der gemessenen Spannungen,
- kontinuierliche Bestimmung und Beobachtung eines geglätteten Mittelwerts $\overline{I_w}$ des Netz-Wirkstroms $I_w$,
- kontinuierliche Bestimmung und Beobachtung der Differenz $\Delta u$ zwischen Zwischenkreisspannung $u_{DC}$ und verketteter Netzspannung $u_v$ gemäß

$$\Delta u = u_{DC} - u_v \,,$$

- Vergleich der Differenz $\Delta u$ mit einem positiven Schwellenwert $\Delta u_{lim}$, und
- Start der grundfrequenten Taktung der Halbleiterschalter, wenn die Differenz $\Delta u$ den Schwellenwert $\Delta u_{lim}$ überschreitet, sowie
- Stoppen der grundfrequenten Taktung der Halbleiterschalter, wenn der geglättete Mittelwert $\overline{I_w}$ des Netz-Wirkstroms $I_w$ sein Vorzeichen wieder wechselt.

Die betrachteten verketteten Netzspannungen $u_v$ entsprechen den paarweisen Potentialunterschieden $u_{RS,Umr}$, $u_{ST,Umr}$, $u_{TR,Umr}$ zwischen den Leitungen R, S, T des Drehstromnetzes. Der Schwellenwert $\Delta u_{lim}$ kann grundsätzlich individuell für die einzelnen verketteten Netzspannungen $u_{RS,Umr}$, $u_{ST,Umr}$, $u_{TR,Umr}$ definiert werden zu $\Delta u_{limDCRS}$, $\Delta u_{limDCST}$, $\Delta u_{limDCTR}$.

Der Begriff kontinuierlich umfasst dabei sowohl eine dauerhafte, zeitkontinuierliche, beispielsweise analoge Messung, Bestimmung und Beobachtung der einzelnen Parameter, als auch eine Messung, Bestimmung und Beobachtung der einzelnen Parameter beispielsweise unter Verwendung digitaler Überwachungs- und Steuerungsverfahren in zeitdiskreten Schritten.

Durch Start der normalen, grundfrequenten Taktung wird ein generatorischer Leistungsfluss aus dem Zwischenkreis in das Drehstromnetz ermöglicht.

Wird die grundfrequente Taktung gestoppt, so arbeitet der Stromrichter dann als einfache passive Diodenbrücke. Durch Anwendung einer Hysterese können darüber hinaus Grenzzyklen vermieden werden.

Vorzugsweise ist der Schwellenwert $\Delta u_{lim}$ zum Einen ausreichend klein gewählt, so dass sich beim Start der grundfrequenten Taktung kein Überstrom aufgrund einer zu großen treibenden Spannung ergibt, und zum Anderen ausreichend groß gewählt, so dass die grundfrequente Taktung nicht aufgrund von beispielsweise Messrauschen oder Systemschwingungen gestartet wird.

Wird beispielsweise eine Sensorik für Zwischenkreisspannung und Netzstrom sowie zur schnellen Überstromerfassung und schnelle Überstromrückkopplung auf die Halbleiterschalter-Ansteuerung verwendet, so ist denkbar, das erfindungsgemäße Verfahren wie folgt durchzuführen:

- kontinuierliches Messen der Zwischenkreisspannung $u_{DC}$,
- kontinuierliche Bestimmung und Beobachtung des Netz-Wirkstroms $I_w$,
- kontinuierliche Bestimmung und Beobachtung eines geglätteten Mittelwerts $\overline{I_w}$ des Netz-Wirkstroms $I_w$,
- Vergleich der Zwischenkreisspannung $u_{DC}$ mit einem Schwellenwert $U_{DClim}$, und
- Start der grundfrequenten Taktung der Halbleiterschalter, wenn die Zwischenkreisspannung $u_{DC}$ den Schwellenwert $u_{DClim}$ überschreitet, sowie
- Stoppen der grundfrequenten Taktung der Halbleiterschalter, wenn der geglättete Mittelwert $\overline{I_w}$ des Netz-Wirkstroms $I_w$ sein Vorzeichen wieder wechselt.

Die kontinuierliche Messung, Bestimmung und Beobachtung der einzelnen Parameter kann dabei ebenfalls unter Verwendung digitaler Überwachungs- und Steuerungsverfahren in zeitdiskreten Schritten erfolgen.

Vorzugsweise wird dabei bei Erreichen einer stromrichterschaltungsspezifischen Maximal-Stromschwelle der betroffene Halbleiterschalter abgeschaltet, und erst dann wieder eingeschaltet, wenn der Strom genügend weit abgeklungen ist.

Wird der Schwellenwert für die Zwischenkreisspannung, ab dem die grundfrequente Taktung gestartet wird z.B. auf die maximal zulässige Netzspannung von

$$\sqrt{2} \cdot u_{Netz,max}$$

gesetzt, und überschreitet die Zwischenkreisspannung diesen Schwellenwert aufgrund einer Energiezufuhr in den Zwischenkreis, dann ist in der Regel die Spannungsdifferenz zwischen Drehstromnetz und Zwischenkreis so groß, dass ein Öffnen eines Strompfads für eine Zeitdauer in einer Größenordnung von $10^{-3}$ s, wie es bei der grundfrequenten Taktung durchgeführt wird, bereits zu einem Überstrom und damit zu einer Schutzabschaltung des Stromrichters führen würde. Erfindungsgemäß wird daher beim Erreichen einer stromrichterschaltungsspezifischen Maximal-Stromschwelle sehr schnell, etwa in einer Größenordnung von $10^{-6}$ s, der betroffene Halbleiterschalter abgeschaltet. Ist der Strom genügend weit abgeklungen, so wird der betroffene Halbleiterschalter wieder eingeschaltet und der Strom kann wieder ansteigen. Hierdurch ergibt sich das grundsätzliche Verhalten eines so genannten Zweipunkt-Reglers, der einen Netzstrom an der Leistungsgrenze des Stromrichters realisiert. Dieses Zweipunkt-Verhalten wird der grundfrequenten Taktung so lange überlagert, bis die Spannungsdifferenz zwischen dem Zwischenkreis und dem Drehstromnetz so weit abgeklungen ist, dass sie keine Überströme mehr bewirkt.

Wird beispielsweise eine Sensorik für Zwischenkreisspannung und Netz- und/oder Zwischenkreisstrom verwendet, so ist denkbar, das erfindungsgemäße Verfahren derart durchzuführen, dass die Halbleiterschalter im Leerlauf oder unter geringer motorischer Last mit Testsignalen getaktet werden, welche

- kompatibel sind mit dem grundfrequenten Schaltmuster im Normalbetrieb,
- im Vergleich zum Normalbetrieb die benötigte Scheinleistung im Leerlauf erheblich reduzieren,
- bei Absinken der Netzspannung im Leerlauf die Zwischenkreisspannung automatisch mitführen, sowie
- durch Auswertung der verbleibenden Scheinleistung im Leerlauf oder unter geringer motorischer Last ein Kriterium zum Start und zum Beenden des grundfrequenten Normalbetriebs liefern.

Dabei ist denkbar, dass die Halbleiterschalter durch die Testsignale periodisch abwechselnd während des Leerlaufs oder während einer geringen motorischen Belastung paarweise oder einzeln jeweils während eines individuellen, begrenzten Winkelbereichs eines Netzwinkels gesperrt, und ansonsten geöffnet sind und das Verhalten von reinen Dioden-Brücken zeigen. Der begrenzte Winkelbereich ist dabei kleiner, als der normale 60° Sektor des grundfrequent getakteten Betriebs und umfasst beispielsweise ein Segment eines solchen Sektors.

Vorzugsweise ist die Lage der individuellen Winkelbereiche so gewählt, dass der Strompfad erst dann geöffnet wird, wenn die Differenz $\Delta u$ zwischen Zwischenkreisspannung $u_{DC}$ und zugeordneter verketteter Netzspannung $u_v$ gering ist.

Vorzugsweise wird dabei die grundfrequente Taktung bei Überschreiten eines Schwellenwerts für den Wirkstrom gestartet.

Eine vorteilhafte Ausgestaltung der Erfindung betrifft einen Stromrichter mit steuerbaren Halbleiterschaltern zur Durchführung des oben beschriebenen Verfahrens, welcher Stromrichter

- Mittel zur kontinuierlichen Erfassung und/oder Bestimmung der Richtung eines momentanen Leistungsflusses,
- Mittel zum Vergleich der Richtung des erfassten und/oder bestimmten Leistungsflusses mit einer gewünschten Richtung des Leistungsflusses, sowie
- Mittel zum Starten und Stoppen der grundfrequenten Taktung der Halbleiterschalter ($T_1$, $T_2$, $T_3$, $T_4$, $T_5$, $T_6$) in Abhängigkeit von der gewünschten Richtung des Leistungsflusses umfasst.

Eine besonders vorteilhafte Ausgestaltung des erfindungsgemäßen Stromrichters umfasst Mittel zum Sperren einzelner Halbleiterschalter während individueller, begrenzter Winkelbereiche ($\{\Phi_1, ..., \Phi_2\}$) eines Netzwinkels ($\Phi$) im Leerlauf oder während geringer motorischer Belastung.

Vorzugsweise sind die Halbleiterschalter des zur Durchführung des oben beschriebenen Verfahrens verwendeten Stromrichters als Insulated Gate Bipolar Transistoren (IGBTs) ausgeführt.

Die Erfindung wird nachfolgend anhand der Zeichnungen erläutert. Dabei zeigen:

FIG 1 eine schematische Darstellung eines Schaltkreises eines an ein Drei-Phasen-Drehstromnetz angeschlossenen grundfrequent getakteten Stromrichers zur Regelung eines Zwischenkreises gemäß Stand der Technik,

FIG 2 den Spannungs- und Stromverlauf des in FIG 1 dargestellten, an ein 400-V-Drehstromnetz angeschlossenen, grundfrequent getaktet betriebenen Stromrichters im Leerlauf, mit $L_C$=1 mH, $C_{DC}$=2 mF,

FIG 3 den Spannungs- und Stromverlauf des in FIG 1 dargestellten, an ein 400-V-Drehstromnetz angeschlossenen, grundfrequent getaktet betriebenen Stromrichters unter motorischer Belastung, mit $L_C$=1 mH, $C_{DC}$=2 mF,

FIG 4 ein erfindungsgemäßes Schaltmuster zur Ansteuerung der Halbleiterschalter des in FIG 1 dargestellten Stromrichters,

FIG 5 eine schematische Darstellung der resultierenden Wirkund Blindströme eines grundfrequent betriebenen Stromrichters mit erfindungsgemäßem reduziertem Schaltsektor ($x_1$=15°) am 400-V-Netz im Leerlauf, mit $L_C$=1 mH, $C_{DC}$=2 mF

FIG 6 eine schematische Darstellung der resultierenden Wirk- und Blindströme eines grundfrequent betriebenen Stromrichters mit Standard-Schaltsektor am 400-V-Netz im Leerlauf, mit $L_C$=1 mH, $C_{DC}$=2mF

FIG 7 eine schematische Darstellung eines Lastsprungs von Leerlauf auf rückspeisenden Betrieb mit Umschaltung wegen Überschreiten einer generatorischen Stromwelle von reduziertem Schaltsektor auf grundfrequenten Standardbetrieb für volle Rückspeiseleistung, sowie

FIG 8 ein Flussdiagramm zur Umschaltung zwischen normalem Vollsektor-Betrieb und erfindungsgemäßem Teilsektor-Betrieb zur Reduzierung der Scheinleistung im Leerlaufpunkt und bei schwacher motorischer Belastung.

Für den bevorzugten Lösungsweg wird wie in FIG 2 schematisch dargestellt eine Transformation des dreiphasigen Netzstroms in seinen Wirkanteil und in seinen Blindanteil verwendet. Zu diesem Zweck wird die Darstellung der Ströme und Spannungen als Raumzeiger gewählt. Der Raumzeiger $x_{\alpha\beta}$ im $\alpha$-$\beta$-Koordinatensystem ergibt sich aus den Komponenten der Stränge R, S, T - im Folgenden Strangkomponenten - wie folgt:

$$x_{\alpha\beta} = x_\alpha + jx_\beta = \begin{bmatrix} x_\alpha \\ x_\beta \end{bmatrix} = \frac{2}{3}\begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix}\begin{bmatrix} x_R \\ x_S \\ x_T \end{bmatrix}. \qquad (a)$$

Diese Definition gilt sowohl für den Raumzeiger $u_{\alpha\beta}$ der Netzspannungen $u_R$, $u_S$, $u_T$, als auch für den Strom-Raumzeiger $i_{\alpha\beta}$ der Phasenströme $i_R$, $i_S$, $i_T$, wobei in Gleichung (a) anstelle von x u bzw. i gesetzt wird. Die Zeitabhängigkeit wird dabei nicht explizit mitgeführt. Der Raumzeiger $i_{\alpha\beta}$ dreht sich mit der Netzfrequenz um den Ursprung des $\alpha$-$\beta$-

Koordinatensystems. Durch Transformation in ein mit der Netzfrequenz rotierendes Koordinatensystem erhält man den stationären Zeiger

$$i_{pq} = i_p + ji_q = \begin{bmatrix} i_p \\ i_q \end{bmatrix} = \begin{bmatrix} \cos\gamma & \sin\gamma \\ -\sin\gamma & \cos\gamma \end{bmatrix} \begin{bmatrix} i_\alpha \\ i_\beta \end{bmatrix}. \qquad (b)$$

Die p-Komponente wird als Wirkanteil, die q-Komponente als Blindanteil des Netzstroms bezeichnet. Das p-q-Koordinatensystem ist gegenüber dem $\alpha$-$\beta$-Koordinatensystem um den zeitvarianten Winkel -$\gamma$ gedreht. Definitionsgemäß wird der Winkel $\gamma$ so gewählt, dass der Raumzeiger $u_{\alpha\beta}$ der Netzspannungsquelle mit der p-Achse zusammenfällt, so dass die Netzspannungsquelle die Wirk-Achse definiert.

Die Wirkleistung $P_W$ ist definiert als der Mittelwert der Leistung über eine Netzperiode T gemäß

$$P_W = \frac{1}{T} \int_0^T u(t)i(t)\,dt. \qquad (c)$$

Die Bezeichnungen Netz-Wirkstrom $I_W = i_p$ und Netz-Blindstrom $I_B = i_b$ für die Momentanwerte des Stroms ergeben sich nachfolgend durch strikte Anwendung der o.g. Transformation gemäß Gleichung (b). Aufgrund der Periodizität von $I_W$ ist gemäß Gleichung (c) damit jedoch nicht notwendigerweise eine von null verschiedene Wirkleistung verbunden.

Der bei einem in FIG 1 dargestellten und einleitend beschriebenen, an ein Drehstromnetz 3 angeschlossenen Stromrichter 1 zur Regelung eines Zwischenkreises 2 im Leerlauf sowie bei geringer motorischer Belastung auftretende Pendelstrom ergibt sich bei der grundfrequenten Taktung durch die Ent- und Aufladevorgänge des Zwischenkreiskondensators $C_{DC}$. Die Zwischenkreisspannung folgt dabei näherungsweise der Schwankung der verketteten Netzspannung $u_v$, da mit dem grundfrequenten Ansteuern der IGBTs $T_1$, ..., $T_6$ ein Leistungsfluss sowohl vom Drehstromnetz 3 in den Zwischenkreis 2 als auch in Gegenrichtung erfolgen kann. Mit zunehmender motorischer Belastung, also einer Wirkleistungsentnahme des Zwischenkreises 2 wird die aus dem grundfrequenten Takten herrührende Pendelleistung kleiner. Der Netzwirkstrom $I_W$ erfährt dann keine zyklischen Vorzeichenwechsel mehr, so dass die eigentlich unerwünschte Entladung des Zwischenkreiskondensators $C_{DC}$ in das Drehstromnetz 3 unterbleibt. Aufgrund der Wirkleistungsentnahme aus dem Zwischenkreis 2 sinkt der Mittelwert der Zwischenkreisspannung $u_{DC}$ und dementsprechend sinkt die Spannungsdifferenz $\Delta u$ zur Entladung des Zwischenkreiskondensators $C_{DC}$ in das Drehstromnetz 3. Die verbleibende in FIG 3 dargestellte Schwankung des Netzstroms bei starker motorischer Belastung des Stromrichters ist eine Systemeigenschaft der im Stromrichter 1 enthaltenen, die IGBTs $T_1$, ..., $T_6$ umfassenden B6-Dioden-Brücke.

Die der Erfindung zugrunde liegende Idee ist ausgehend von obigen Ausführungen die Verwendung einer Stromrichterschaltung, die sowohl einen aktiven Ein-/Rückspeise-Leistungsfluss, als auch einen rein passiven Betrieb in eine Leitungsrichtung ermöglicht. Eine bevorzugte Schaltung ist die in FIG 1 dargestellte IGBT-B6-Brücke, die eine passive parallele Dioden-Brücke beinhaltet.

Erfindungsgemäß werden die für den Leistungsfluss vom Zwischenkreis 2 in das Drehstromnetz 3 vorzugsweise eingesetzten IGBTs $T_1$, ..., $T_6$ grundsätzlich nur noch dann grundfrequent getaktet angesteuert, wenn tatsächlich Wirkleistung $I_W$ in das Drehstromnetz 3 eingespeist werden soll. Die grundfrequente Taktung der vorzugsweise als IGBTs ausgeführten Halbleiterschalter ist erfindungsgemäß somit abhängig von der gewünschten Richtung des Leistungsflusses.

Die Art der Ermittlung der gewünschten Richtung des Leistungsflusses und damit die genaue Ausprägung der Kriterien zur An- und Abschaltung der grundfrequenten Taktung ist abhängig von den verschiedenen Systemkomponenten.

Dabei sind grundsätzlich drei Varianten denkbar:

Variante A: Sensorik für Netzspannung, Zwischenkreisspannung sowie Netz- und/oder Zwischenkreisstrom:

Hierbei werden die Netzspannungen, beispielsweise die Strangspannungen $u_R$, $u_S$, $u_T$ oder die Leiterspannungen, sowie die Zwischenkreisspannung $u_{DC}$ gemessen. Überschreitet die Differenz $\Delta u$ zwischen Zwischenkreisspannung $u_{DC}$ und einer verketteten Netzspannung $u_v$, beispielsweise $u_{RS,Umr}$, einen positiven Schwellenwert $\Delta u_{lim}$, beispielsweise $\Delta u_{lim,DcRS}$ gemäß

$$\Delta u = u_{DC} - u_{RS,Umr} > \Delta u_{lim,DcRS}$$

so ist die Zwischenkreisspannung $u_{DC}$ aufgrund eines Leistungsflusses in den Zwischenkreis 2 angestiegen. Durch Start der normalen, grundfrequenten Taktung der IGBTs $T_1$, ..., $T_6$ wird ein generatorischer Leistungsfluss aus dem Zwischenkreis 2 in das Drehstromnetz 3 ermöglicht. Der Schwellenwert $\Delta u_{lim}$ muss dabei einerseits so klein gewählt werden, dass sich beim Start der grundfrequenten Taktung kein Überstrom aufgrund einer zu großen treibenden Spannung ergibt. Andererseits muss der Schwellenwert $\Delta u_{lim}$ groß genug gewählt werden, damit das Kriterium für das Starten der grundfrequenten Taktung nicht aufgrund von Messrauschen oder Systemschwingungen anspricht. Die grundfrequente Taktung wird gestoppt, wenn der geglättete Mittelwert $\overline{I_w}$ des Netz-Wirkstroms $I_w$ sein Vorzeichen wieder wechselt und somit den motorischen Betriebsfall anzeigt. Der Stromrichter 1 arbeitet dann als einfache passive Diodenbrücke. Durch Anwendung einer Hysterese können Grenzzyklen vermieden werden.

Variante B: Sensorik für Zwischenkreisspannung und Netzstrom sowie schnelle Überstromerfassung und schnelle Überstromrückkopplung auf die IGBT-Ansteuerung:

Hierbei wird die Zwischenkreisspannung $u_{DC}$ gemessen. Überschreitet die Zwischenkreisspannung $u_{DC}$ aufgrund von Energiezufuhr in den Zwischenkreis 2 einen Schwellenwert $u_{DClim}$, SO wird die grundfrequente Taktung der IGBTs $T_1$, ..., $T_6$ des Stromrichters 1 gestartet. Der Betrieb ähnelt einem so genannten Chopperbetrieb. Der Schwellenwert $u_{Dclim}$ wird beispielsweise auf den bei maximal zulässiger Netzspannung $U_{Netz,max}$ im Leerlauf erreichbaren Spannungswert

$$\sqrt{2} \cdot u_{Netz,max}$$

gesetzt, so dass als Kriterium für das Starten des grundfrequent getakteten Betriebs

$$u_{DC} > u_{DC\,lim} > \sqrt{2} \cdot u_{Netz,max}$$

gilt. In der Regel ist nun die Spannungsdifferenz zwischen Drehstromnetz 3 und Zwischenkreis 2 so groß, dass ein Öffnen eines Strompfads für eine Zeitdauer in einer Größenordnung von $10^{-3}$ s, wie es bei der grundfrequenten Taktung durchgeführt wird, bereits zu einem Überstrom und damit zu einer Schutzabschaltung des Stromrichters führen würde. Bei Erreichen einer stromrichterschaltungsspezifischen Maximal-Stromschwelle muss daher sehr schnell, etwa in einer Größenordnung von $10^{-6}$ s, der betroffene IGBT abgeschaltet werden. Ist der Strom genügend weit abgeklungen, so wird der betroffene IGBT wieder eingeschaltet und der Strom kann wieder ansteigen. Hierdurch ergibt sich das grundsätzliche Verhalten eines so genannten Zweipunkt-Reglers, der einen Netzstrom an der Leistungsgrenze des Stromrichters 1 realisiert. Dieses Zweipunkt-Verhalten wird der grundfrequenten Taktung so lange überlagert, bis die Spannungsdifferenz zwischen dem Zwischenkreis 2 und dem Drehstromnetz 3 so weit abgeklungen ist, dass sie keine Überströme mehr bewirkt. Die grundfrequente Taktung wird gestoppt, wenn der geglättete Mittelwert $\overline{I_w}$ des Netz-Wirkstroms $I_w$ sein Vorzeichen wieder wechselt und somit den motorischen Betriebsfall anzeigt. Der Stromrichter 1 arbeitet dann als einfache passive Diodenbrücke. Durch Anwendung einer Hysterese können Grenzzyklen vermieden werden.

Variante C: Sensorik für Zwischenkreisspannung und Netz- und/oder Zwischenkreisstrom:

Diese Lösung erfordert einen minimalen Aufwand an Hardware und stellt daher ein bevorzugtes Ausführungsbeispiel der Erfindung dar. Sie wird daher im nachfolgenden ausführlich erläutert.

Ausgangspunkt der Überlegungen zu C. ist das im Leerlauf des grundfrequent betriebenen Stromrichters 1 angestrebte Deaktivieren der IGBTs $T_1$, ..., $T_6$ mit der dadurch erzielbaren Reduzierung der benötigten Scheinleistung.

Bei einer geringen Leistungszufuhr und dadurch langsamem Steigen von $u_{DC}$ oder durch langsames Sinken der Netzspannung kann sich im Leerlauf-Bereich eine große Spannungsdifferenz zwischen der Amplitude der verketteten Netzspannung $u_{RST,Umr}$ und der Zwischenkreisspannung $u_{DC}$ aufbauen. Ohne Messung der Netzspannung, wie unter A. beschrieben, kann die Spannungsdifferenz zunächst nicht erkannt werden und führt bei anschließendem Start des grundfrequenten IGBT-Betriebs ohne zusätzliche Maßnahmen, wie beispielsweise die unter B. beschriebenen, zu Überströmen und damit zu Abschaltungen.

Die Grundidee von Variante C. ist nun, die IGBTs $T_1$, ..., $T_6$ im Leerlauf nicht vollständig zu sperren, sondern eine Art von Testsignalen auszugeben, die

- kompatibel sind mit dem grundfrequenten Schaltmuster im Normalbetrieb,
- im Vergleich zu Normalbetrieb im Leerlauf die benötigte Scheinleistung erheblich reduzieren,
- bei Absinken der Netzspannung im Leerlauf die Zwischenkreisspannung automatisch mitführen, sowie
- durch Auswertung der verbliebenen Scheinleistung im Bereich des Leerlaufs ein Kriterium zum Start und zum Beenden des grundfrequenten Normalbetriebs liefern.

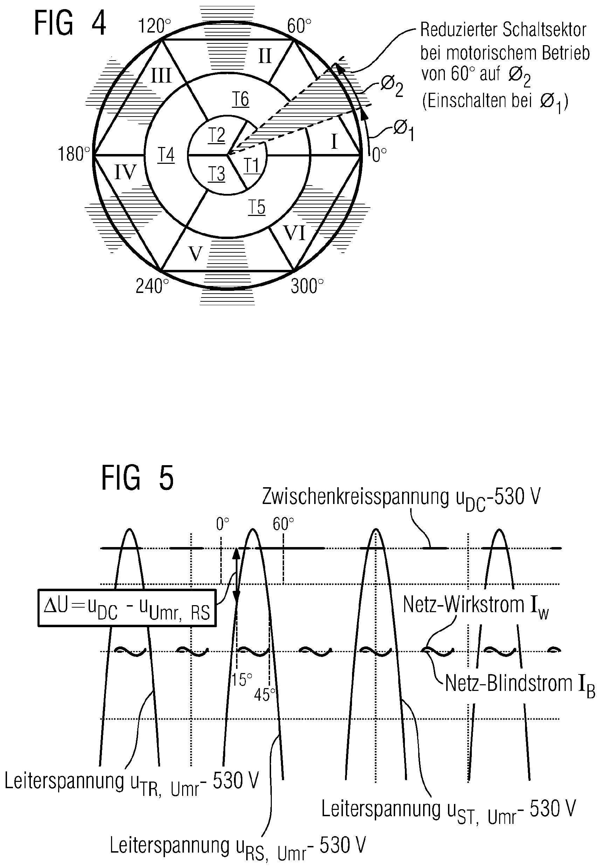

Ein bevorzugtes Schaltmuster für die Testsignale ist ein FIG 4 dargestellt. FIG 4 zeigt dabei die Steuerlogik der Halbleiterschalter $T_1$ bis $T_6$ im grundfrequent getakteten Betrieb für eine Netzperiode von 0° bis 360°. Unter "grundfrequent" wird dabei verstanden, dass die Halbleiterschalter $T_1$ bis $T_6$ in deren individuellen Winkelbereichen permanent, beispielsweise durch Ansteuerung mit einem Gleichstrom-Schaltsignal, oder zumindest überwiegend, beispielsweise durch Ansteuerung mit einem Hochfrequenz-Schaltsignal, angesteuert sind.

Normalerweise wird an den Grenzen der 60°-Sektoren I, II, III, IV, V, VI des Netzwinkels $\Phi$ jeweils ein Halbleiterschalter $T_1$, $T_2$, $T_3$, $T_4$, $T_5$, $T_6$ ausgeschaltet und ein anderer Halbleiterschalter $T_1$, $T_2$, $T_3$, $T_4$, $T_5$, $T_6$ eingeschaltet. Ein weiterer Halbleiterschalter $T_1$, $T_2$, $T_3$, $T_4$, $T_5$, $T_6$ bleibt an der jeweiligen Grenze zwischen den Sektoren I, II, III, IV, V, VI angesteuert, alle anderen Halbleiterschalter $T_1$, $T_2$, $T_3$, $T_4$, $T_5$, $T_6$ sind geöffnet. Das Schließen der Halbleiterschalter $T_1$, $T_2$, $T_3$, $T_4$, $T_5$, $T_6$ wird nun in jedem Sektor I, II, III, IV, V, VI, in der Darstellung in FIG 4 gezeigt für den Sektor I, um den Winkel $\Phi_1$ verschoben und auf den Winkelbereich $\Phi_2$ gekürzt. Die Halbleiterschalter $T_1$, $T_2$, $T_3$, $T_4$, $T_5$, $T_6$ sind dann nur noch jeweils in den schraffierten Segmenten angesteuert. Zu allen anderen Zeiten bzw. Netzwinkeln sind alle Halbleiterschalter $T_1$, $T_2$, $T_3$, $T_4$, $T_5$, $T_6$ geöffnet und man erhält das Verhalten einer reinen Diodenbrücke.

Das erfindungsgemäße Verfahren nach C. bewirkt eine Reduzierung der Schaltdauer bei motorischem Betrieb. Am Beispiel des ersten Sektors I ist FIG 4 entnehmbar, dass ein Einschalten von T1/T6 erst bei $\Phi_1$, und ein Ausschalten von T1/T6 bei $\Phi_1 + \Phi_2$ erfolgt.

Wichtig ist hervorzuheben, dass auch andere Formen für die Testsignale sinnvoll sind, beispielsweise eine Aufteilung der vorgeschlagenen Segmente in kleinere Unterbereiche.

Hintergrund für die Wahl der Form der Testsignale ist, den für den jeweiligen Schaltsektor erforderlichen Strompfad erst dann zu öffnen, wenn die Differenzspannung

$$\Delta u = u_{DC} - u_{RS,Umr}$$

zwischen Zwischenkreis und Drehstromnetz gering ist.

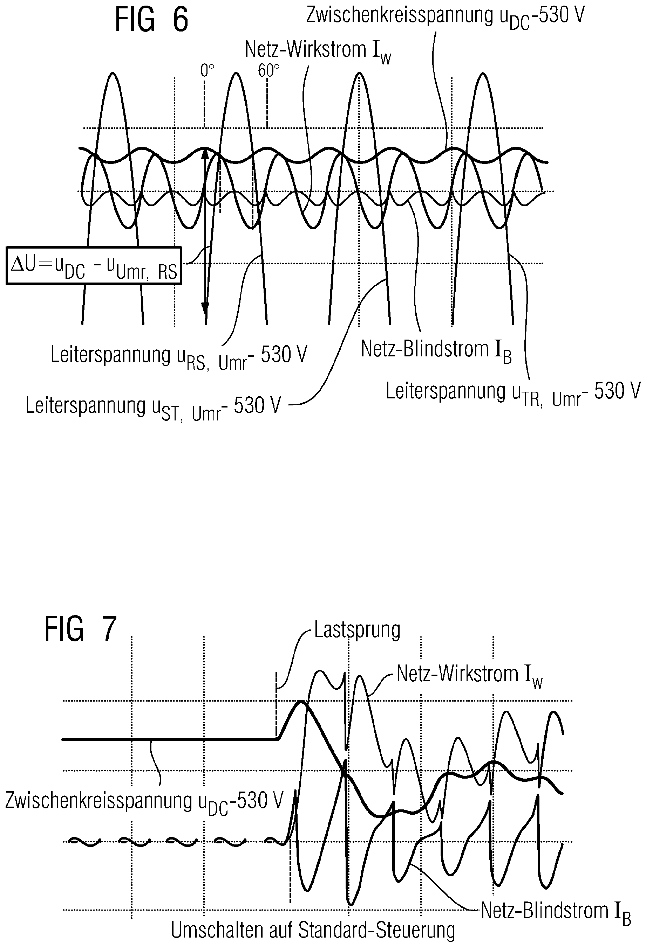

Einem Vergleich der in FIG 5 und FIG 6 dargestellten resultierenden Wirk- und Blindströme im Leerlauf für einen nach Variante C. erfindungsgemäß reduzierten Schaltbereich (FIG 5) der Halbleiterschalter eines Stromrichters sowie einen dem Stand der Technik entsprechenden Schaltbereich der Halbleiterschalter des selben Stromrichters kann die durch das erfindungsgemäße Verfahren erreichbare Reduzierung der Wirk- und Blindstrombelastung im Leerlaufpunkt entnommen werden.

Bei einer hochdynamischen generatorischen Belastung des Zwischenkreises muss innerhalb kurzer Zeit der normale Vollsektor-Betrieb aktiviert werden, da die Leistung sonst nicht in das Netz zurückgespeist werden kann und die Zwischenkreisspannung bis zur Abschaltungsgrenze anstiegen würde oder aufgrund der hohen Differenzspannung zum Netz hohe Überströme auftreten würden. In FIG 7 ist ein derartiger Umsteuerungsvorgang dargestellt. Als Startbedingung für den normalen 60°-Betrieb kommt vorzugsweise das Überschreiten einer Schwelle für den Wirkstrom zum Tragen.

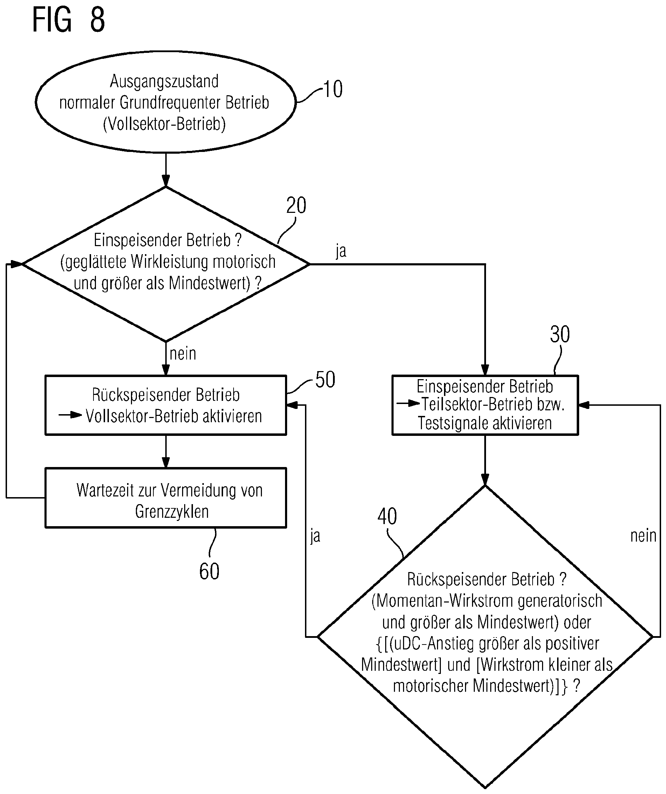

Ein möglicher Algorithmus zur Umschaltung zwischen dem normalen grundfrequenten Betrieb zur Rückspeisung und einem erfindungsgemäßen Testsignal-Betrieb mit reduziertem Schaltsektor nach Variante C. ist in FIG 8 dargestellt.

Ausgehend von einem Ausgangszustand 10, bei dem der Stromrichter normal grundfrequent getaktet betrieben wird, wird in einem ersten Verfahrensschritt 20 überprüft, ob ein einspeisender Betrieb stattfindet, oder nicht. Dies erfolgt beispielsweise durch Betrachtung der geglätteten Wirkleistung und Vergleich der Selben mit einem Mindestwert.

Wird im Verfahrensschritt 20 ein einspeisender Betrieb festgestellt, so wird in einem weiteren Verfahrensschritt 30 der Teilsektorbetrieb nach C. durch Aktivierung der Testsignale aktiviert.

Nun wird ausgehend vom einspeisenden Betrieb kontinuierlich, beispielsweise in zeitdiskreten Schritten mittels einer computergesteuerten Überwachungseinheit, in einem Verfahrensschritt 40 überprüft, ob ein rückspeisender Betrieb vorliegt, oder nicht. Diese Überprüfung findet statt beispielsweise durch Vergleich des momentanen generatorischen Wirkstroms mit einem Mindestwert oder durch eine Beobachtung des Anstiegs der Zwischenkreisspannung $u_{DC}$ und Vergleich dieses Anstiegs mit einem Mindestwert, sowie durch Vergleich des Wirkstroms $I_W$ mit einem Mindestwert.

Kann kein rückspeisender Betrieb festgestellt werden, wird Schritt 30 und 40 so lange wiederholt, bis ein rückspeisender Betrieb festgestellt werden kann.

Wird ein rückspeisender Betrieb festgestellt, so wird in einem Verfahrensschritt 50 der Vollsektor Betreib aktiviert, und der Stromrichter wieder grundfrequent getaktet betrieben.

Ein auf den Verfahrensschritt 50 folgender Wartezyklus 60 dient der Vermeidung von Grenzzyklen, bevor das Verfahren mit dem Verfahrensschritt 20 fortgesetzt wird.

Kann im Verfahrensschritt 20 kein einspeisender Betrieb festgestellt werden, so werden die Verfahrensschritte 50 und 60 so lange wiederholt, bis ein einspeisender Betrieb festgestellt werden kann.

Wichtig ist hervorzuheben, dass mit dem hier beschriebenen erfindungsgemäßen Verfahren die Scheinleistung eines grundfrequent getakteten Stromrichters im Leerlaufpunkt und bei motorischer Teillast erheblich reduziert werden kann. Hierdurch lässt sich in erheblichem Umfang eine Energieeinsparung und damit Kosteneinsparung beim Anwender erreichen. Das erfindungsgemäße Verfahren hat darüber hinaus unmittelbare Auswirkung auf Dimensionierung des Netzanschlusses beim Anwender und ermöglicht damit erhebliche Kosteneinsparungen. Durch die deutliche Verringerung der Pendelströme wird darüber hinaus eine höhere Akzeptanz des grundfrequenten Betriebs beim Anwender erreicht.

Außerdem wird durch das erfindungsgemäße Verfahren

- eine im Mittel reduzierte thermische Belastung des Stromrichters und der Zusatzkomponenten erreicht.
- keine Erhöhung der Schaltfrequenz der Halbleiterschalter für den Testsignal-Betrieb benötigt.

Des Weiteren ist das erfindungsgemäße Verfahren bzw. ein Stromrichter zur Durchführung des erfindungsgemäßen Verfahrens kostengünstig zu realisieren, da kein zusätzlicher Bauteilaufwand oder Fertigungsaufwand seitens des Stromrichters im Vergleich zum Stand der Technik besteht. Somit ist das erfindungsgemäße Verfahren kompatibel zur bisherigen Implementierung des grundfrequenten Betriebs.

## Patentansprüche

1. Verfahren zur Verringerung des Blindleistungsbedarfs eines mit steuerbaren Halbleiterschaltern ($T_1$, $T_2$, $T_3$, $T_4$, $T_5$, $T_6$) bestückten, grundfrequent getakteten, netzseitigen Stromrichters (1) im Leerlauf sowie bei geringer motorischer Belastung, wobei die grundfrequente Taktung der Halbleiterschalter ($T_1$, $T_2$, $T_3$, $T_4$, $T_5$, $T_6$) abhängig von einer gewünschten Richtung des Leistungsflusses erfolgt, **dadurch gekennzeichnet, dass** die Halbleiterschalter ($T_1$, $T_2$, $T_3$, $T_4$, $T_5$, $T_6$) im Leerlauf oder unter geringer motorischer Belastung mit Testsignalen getaktet werden, welche

    - kompatibel sind mit dem grundfrequenten Schaltmuster im Normalbetrieb,
    - im Vergleich zum Normalbetrieb die benötigte Scheinleistung im Leerlauf erheblich reduzieren,
    - bei Absinken der Netzspannung im Leerlauf die Zwischenkreisspannung automatisch mitführen, sowie
    - durch Auswertung der verbleibenden Scheinleistung im Leerlauf oder unter geringer motorischer Belastung ein Kriterium zum Start und zum Beenden des grundfrequenten Normalbetriebs liefern.

2. Verfahren nach Anspruch **1, dadurch gekennzeichnet, dass** die Halbleiterschalter ($T_1$, $T_2$, $T_3$, $T_4$, $T_5$, $T_6$) durch die Testsignale periodisch abwechselnd während des Leerlaufs oder während einer geringen motorischen Belastung paarweise oder einzeln jeweils während eines individuellen, begrenzten Winkelbereichs ($\{\Phi_1, ..., \Phi_2\}$) eines Netzwinkels ($\Phi$) gesperrt, und ansonsten geöffnet sind.

3. Verfahren nach Anspruch **2, dadurch gekennzeichnet, dass** die Lage der individuellen Winkelbereiche ($\{\Phi_1, ..., \Phi_2\}$) so gewählt ist, dass der Strompfad erst dann geöffnet wird, wenn die Differenz ($\Delta u$) zwischen Zwischenkreisspannung ($u_{DC}$) und verketteter Netzspannung ($u_v$, $U_{RST}$) gering ist.

4. Verfahren nach einem der Ansprüche **2** oder **3, dadurch gekennzeichnet, dass** die grundfrequente Taktung bei Überschreiten eines Schwellenwerts für den Wirkstrom gestartet wird.

5. Verfahren nach Anspruch 1, **gekennzeichnet durch** die Verfahrensschritte:

    - kontinuierliche Messung der Netzspannungen $u_{R,S,T}$ eines mit dem Stromrichter verbundenen Drehstromnetzes (3),
    - kontinuierliche Messung der Zwischenkreisspannung $u_{DC}$ eines mit dem Stromrichter verbundenen Zwischenkreises (2),

- kontinuierliche Bestimmung und Beobachtung mindestens einer verketteten Netzspannung $u_v$ anhand der gemessenen Netzspannungen $u_{R,S,T}$,
- kontinuierliche Bestimmung und Beobachtung der Differenz $\Delta u$ zwischen Zwischenkreisspannung $u_{DC}$ und verketteter Netzspannung $u_v$ gemäß

$$\Delta u = u_{DC} - u_v$$

- kontinuierliche Bestimmung und Beobachtung eines Netz-Wirkstroms $I_w$,
- kontinuierliche Bestimmung und Beobachtung eines geglätteten Mittelwerts $\overline{I_w}$ des Netz-Wirkstroms $I_w$,
- Vergleich der Differenz $\Delta u$ mit einem positiven Schwellenwert $\Delta u_{lim}$, und
- Start der grundfrequenten Taktung der Halbleiterschalter, wenn die Differenz $\Delta u$ den Schwellenwert $\Delta u_{lim}$ überschreitet, sowie
- Stoppen der grundfrequenten Taktung der Halbleiterschalter, wenn der geglättete Mittelwert $\overline{I_w}$ des Netz-Wirkstroms $I_w$ sein Vorzeichen wechselt.

6. Verfahren nach Anspruch **5, dadurch gekennzeichnet, dass** der Schwellenwert $\Delta u_{lim}$ zum Einen ausreichend klein gewählt ist, so dass sich beim Start der grundfrequenten Taktung kein Überstrom aufgrund einer zu großen treibenden Spannung ergibt, und dass der Schwellenwert $\Delta u_{lim}$ zum Anderen ausreichend groß gewählt ist, so dass die grundfrequente Taktung nicht aufgrund von beispielsweise Messrauschen oder Systemschwingungen gestartet wird.

7. Verfahren nach Anspruch 1, **gekennzeichnet durch** die Verfahrensschritte:

- kontinuierliches Messen der Zwischenkreisspannung $u_{DC}$,
- kontinuierliche Bestimmung und Beobachtung des Netz-Wirkstroms $I_w$,
- kontinuierliche Bestimmung und Beobachtung eines geglätteten Mittelwerts $\overline{I_w}$ des Netz-Wirkstroms $I_w$,
- Vergleich der Zwischenkreisspannung $u_{DC}$ mit einem Schwellenwert $u_{DClim}$, und
- Start der grundfrequenten Taktung der Halbleiterschalter, wenn die Zwischenkreisspannung $u_{DC}$ den Schwellenwert $u_{DClim}$ überschreitet, sowie
- Stoppen der grundfrequenten Taktung der Halbleiterschalter, wenn der geglättete Mittelwert $\overline{I_w}$ des Netz-Wirkstroms $I_w$ sein Vorzeichen wechselt.

8. Verfahren nach Anspruch **7, dadurch gekennzeichnet, dass** bei Erreichen einer stromrichterschaltungsspezifischen Maximal-Stromschwelle der betroffene Halbleiterschalter ($T_1$, $T_2$, $T_3$, $T_4$, $T_5$, $T_6$) abgeschaltet wird, und erst dann wieder eingeschaltet wird, wenn der Strom genügend weit abgeklungen ist.

9. Stromrichter (1) mit steuerbaren Halbleiterschaltern ($T_1$, $T_2$, $T_3$, $T_4$, $T_5$, $T_6$) zur Durchführung des Verfahrens nach einem der vorhergehenden Ansprüche, aufweisend

- Mittel zur kontinuierlichen Erfassung und/oder Bestimmung der Richtung eines momentanen Leistungsflusses,
- Mittel zum Vergleich der Richtung des erfassten und/oder bestimmten Leistungsflusses mit einer gewünschten Richtung des Leistungsflusses, sowie
- Mittel zum Starten und Stoppen der grundfrequenten Taktung der Halbleiterschalter ($T_1$, $T_2$, $T_3$, $T_4$, $T_5$, $T_6$) in Abhängigkeit von der gewünschten Richtung des Leistungsflusses,

**dadurch gekennzeichnet, dass** der Stromrichter (1) eine Sensorik für Zwischenkreisspannung und Netz- und/oder Zwischenkreisstrom umfasst und derart ausgebildet ist, die Halbleiterschalter ($T_1$, $T_2$, $T_3$, $T_4$, $T_5$, $T_6$) im Leerlauf oder unter geringer motorischer Belastung mit Testsignalen zu takten, welche
- kompatibel mit dem grundfrequenten Schaltmuster im Normalbetrieb sind,
- im Vergleich zum Normalbetrieb die benötigte Scheinleistung im Leerlauf erheblich reduzieren,
- bei Absinken der Netzspannung im Leerlauf die Zwischenkreisspannung automatisch mitführen, sowie
- durch Auswertung der verbleibenden Scheinleistung im Leerlauf oder unter geringer motorischer Last ein Kriterium zum Start und zum Beenden des grundfrequenten Normalbetriebs liefern.

10. Stromrichter nach Anspruch **9, gekennzeichnet durch** Mittel zum Sperren einzelner Halbleiterschalter während individueller, begrenzter Winkelbereiche ($\{\Phi_1, ..., \Phi_2\}$) eines Netzwinkels ($\Phi$) im Leerlauf oder während geringer motorischer Belastung.

**11.** Stromrichter nach Anspruch **9** oder **10, dadurch gekennzeichnet , dass** die Halbleiterschalter Insulated Gate Bipolar Transistoren (IGBTs) umfassen.

**Claims**

**1.** Method for reducing the reactive power requirement of a fundamental frequency clocked power supply side converter (1), equipped with controllable semiconductor switches ($T_1$, $T_2$, $T_3$, $T_4$, $T_5$, $T_6$), under no load and with low motor loading, wherein the fundamental frequency clocking of the semiconductor switches ($T_1$, $T_2$, $T_3$, $T_4$, $T_5$, $T_6$) is effected depending on a desired direction of the power flow, **characterized in that** the semiconductor switches ($T_1$, $T_2$, $T_3$, $T_4$, $T_5$, $T_6$) are clocked under no load or under low motor loading with test signals which

- are compatible with the fundamental frequency switching pattern in normal operation,
- considerably reduce the required apparent power under no load in comparison with normal operation,
- automatically track the intermediate circuit voltage upon a decrease in the power supply voltage under no load, and
- supply a criterion for starting and for ending the fundamental frequency normal operation through evaluation of the remaining apparent power under no load or under low motor loading.

**2.** Method according to Claim 1, **characterized in that** the semiconductor switches ($T_1$, $T_2$, $T_3$, $T_4$, $T_5$, $T_6$) are turned off by the test signals periodically alternately during no load or during a low motor loading in pairs or individually in each case during an individual limited angular range ($\{\Phi_1..., ..., \Phi_2\}$) of a power supply angle ($\Phi$), and are otherwise turned off.

**3.** Method according to Claim 2, **characterized in that** the position of the individual angular ranges ($\{\Phi_1..., ..., \Phi_2\}$) is chosen such that the current path is opened only when the difference ($\Delta u$) between intermediate circuit voltage ($u_{DC}$) and line-to-line power supply voltage ($u_v$, $u_{RST}$) is small.

**4.** Method according to either of Claims 2 and 3, **characterized in that** the fundamental frequency clocking is started when a threshold value for the active current is exceeded.

**5.** Method according to Claim 1, **characterized by** the method steps of:

- continuously measuring the power supply voltages $u_{R,S,T}$ of a three-phase power supply (3) connected to the converter,
- continuously measuring the intermediate circuit voltage $u_{DC}$ of an intermediate circuit (2) connected to the converter,
- continuously determining and observing at least one line-to-line power supply voltage $u_v$ on the basis of the measured power supply voltages $U_{R,S,T}$
- continuously determining and observing the difference $\Delta u$ between intermediate circuit voltage $u_{DC}$ and line-to-line power supply voltage $u_v$ in accordance with

$$\Delta u \ = \ u_{DC} \ - \ u_v$$

- continuously determining and observing a power supply active current $I_w$,
- continuously determining and observing a smoothed mean value $\overline{I}_w$ of the power supply active current $I_w$,
- comparing the difference Au with a positive threshold value $\Delta u_{lim}$, and
- starting the fundamental frequency clocking of the semiconductor switches if the difference $\Delta u$ exceeds the threshold value $\Delta u_{lim}$, and
- stopping the fundamental frequency clocking of the semiconductor switches if the smoothed mean value $\overline{I}_w$ of the power supply active current $I_w$ changes its sign.

**6.** Method according to Claim 5, **characterized in that** the threshold value $\Delta u_{lim}$ is on the one hand chosen to be small enough such that when the fundamental frequency clocking is started, no overcurrent arises on account of an

**EP 2 002 533 B1**

excessively large driving voltage, and **in that** the threshold value $\Delta u_{lim}$ is on the other hand chosen to be large enough such that the fundamental frequency clocking is not started on account of, for example, measurement noise or system oscillations.

7. Method according to Claim 1, **characterized by** the method steps of:

- continuously measuring the intermediate circuit voltage $U_{DC}$,
- continuously determining and observing the power supply active current $I_w$,
- continuously determining and observing a smoothed mean value $\overline{I_w}$ of the power supply active current $I_w$,
- comparing the intermediate circuit voltage $u_{DC}$ with a threshold value $u_{DClim}$, and
- starting the fundamental frequency clocking of the semiconductor switches if the intermediate circuit voltage $u_{DC}$ exceeds the threshold value $u_{DClim}$, and
- stopping the fundamental frequency clocking of the semiconductor switches if the smoothed mean value $\overline{I_w}$ of the power supply active current $I_w$ changes its sign.

8. Method according to Claim 7, **characterized in that** when a converter circuit-specific maximum current threshold is reached, the affected semiconductor switch ($T_1$, $T_2$, $T_3$, $T_4$, $T_5$, $T_6$) is switched off, and is switched on again only when the current has subsided to a sufficient extent.

9. Converter (1) comprising controllable semiconductor switches ($T_1$, $T_2$, $T_3$, $T_4$, $T_5$, $T_6$) for carrying out the method according to any of the preceding claims, having

- means for continuously detecting and/or determining the direction of an instantaneous power flow,
  means for comparing the direction of the detected and/or determined power flow with a desired direction of the power flow, and
- means for starting and stopping the fundamental frequency clocking of the semiconductor switches ($T_1$, $T_2$, $T_3$, $T_4$, $T_5$, $T_6$) in a manner dependent on the desired direction of the power flow,
  **characterized in that** the converter (1) comprises a sensor system for intermediate circuit voltage and power supply and/or intermediate circuit current and is configured so as to clock the semiconductor switches ($T_1$, $T_2$, $T_3$, $T_4$, $T_5$, $T_6$) under no load or under low motor loading with test signals which
- are compatible with the fundamental frequency switching pattern in normal operation,
- considerably reduce the required apparent power under no load in comparison with normal operation,
- automatically track the intermediate circuit voltage upon a decrease in the power supply voltage under no load, and
- supply a criterion for starting and for ending the fundamental frequency normal operation through evaluation of the remaining apparent power under no load or under low motor loading.

10. Converter according to Claim 9, **characterized by** means for turning off individual semiconductor switches during individual limited angular ranges ($\{\Phi_1..., ..., \Phi_2\}$) of a power supply angle ($\Phi$) under no load or during low motor loading.

11. Converter according to Claim 9 or 10, **characterized in that** the semiconductor switches comprise insulated gate bipolar transistors (IGBTs).

## Revendications

1. Procédé de diminution en marche à vide ainsi qu'à une charge de moteur petite, du besoin de puissance réactive d'un convertisseur (1) du côté du réseau cadencé en fréquence de base et équipé d'interrupteurs ($T_1$, $T_2$, $T_3$, $T_4$, $T_5$, $T_6$) à semi-conducteur pouvant être commandés, dans lequel le cadencement à la fréquence de base des interrupteurs ($T_1$, $T_2$, $T_3$, $T_4$, $T_5$, $T_6$) à semi-conducteur s'effectue en fonction d'un sens souhaité du flux de puissance, **caractérisé en ce que** l'on cadence les interrupteurs ($T_1$, $T_2$, $T_3$, $T_4$, $T_5$, $T_6$) à semi-conducteur, en marche à vide ou sous une charge de moteur petite, par des signaux de test, qui

- sont compatibles avec le modèle de commutation en fréquence de base en fonctionnement normal,
- réduisent considérablement en marche à vide la puissance apparente nécessaire par rapport au fonctionnement normal,
- si la tension du réseau s'abaisse en marche à vide, appliquent automatiquement la tension de circuit intermédiaire, ainsi que

- en exploitant la puissance apparente restante en marche à vide ou sous une charge de moteur petite, fournissent un critère pour faire commencer le fonctionnement normal à la fréquence de base ou pour y mettre fin

2. Procédé suivant la revendication 1, **caractérisé en ce que** les interrupteurs ($T_1$, $T_2$, $T_3$, $T_4$, $T_5$, $T_6$) à semi-conducteur sont fermés par les signaux de test, en alternance périodiquement, pendant la marche à vide ou pendant une charge de moteur petite, par paire ou individuellement, respectivement pendant une plage ($\{\Phi_1, ..., \Phi_2\}$) angulaire limitée individuellement d'un angle ($\Phi$) de réseau et sinon sont ouverts.

3. Procédé suivant la revendication 2, **caractérisé en ce que** la position des plages ($\{\Phi_1, ..., \Phi_2\}$) angulaires individuelles est choisie de manière à ce que le trajet de courant ne s'ouvre que si la différence ($\Delta u$) entre la tension ($u_{DC}$) du circuit intermédiaire et la tension ($u_v$, $u_{RST}$) de réseau composé est petite.

4. Procédé suivant l'une des revendications 2 ou 3, **caractérisé en ce que** l'on fait débuter le cadencement à la fréquence de base à une valeur de seuil du courant actif.

5. Procédé suivant la revendication 1, **caractérisé par** les stades de procédé :

- mesure des tensions $u_{R,S,T}$ d'un réseau (3) triphasé relié au convertisseur,
- mesure en continu de la tension $U_{DC}$ d'un circuit (2) intermédiaire relié au convertisseur,
- détermination et observation en continu d'au moins une tension $U_v$ de réseau composé à l'aide des tensions $U_{R,S,T}$ de réseau mesuré,
- détermination et observation en continu de la différence $\Delta u$ entre la tension $u_{DC}$ de circuit intermédiaire et la tension $u_v$ de réseau composé suivant

$$\Delta u = u_{DC} - u_v$$

- détermination et observation en continu d'un courant $I_w$ actif de réseau,
- détermination et observation en continu d'une valeur $\overline{I_w}$ moyenne lissée du courant $I_w$ actif du réseau,
- comparaison de la différence $\Delta u$ à une valeur $\Delta u_{lim}$ de seuil positive et
- début du cadencement à la fréquence de base des interrupteurs à semi-conducteur si la différence $\Delta u$ dépasse la valeur $\Delta u_{lim}$ de seuil, ainsi que
- arrêt du cadencement à la fréquence de base des interrupteurs à semi-conducteur si la valeur $\overline{I_w}$ moyenne lissée du courant $I_w$ actif du réseau change de signe.

6. Procédé suivant la revendication 5, **caractérisé en ce que** la valeur $\Delta u_{lim}$ de seuil d'une part est choisie suffisamment petite, de manière qu'au commencement du cadencement à la fréquence de base il ne se produise pas de surcourant sur la base d'une tension d'entraînement trop grande et **en ce que** d'autre part la valeur $\Delta u_{lim}$ de seuil est choisie suffisamment grande, de manière à ce que le cadencement à la fréquence de base ne soit pas commencé en raison par exemple de bruits de mesure ou d'oscillations systématiques.

7. Procédé suivant la revendication 1, **caractérisé par** les stades de procédé :

- mesure en continu de la tension $U_{DC}$ de circuit intermédiaire,
- détermination et observation en continu du courant $I_w$ actif du réseau,
- détermination et observation en continu d'une valeur $\overline{I_w}$ moyenne lissée du courant $I_w$ actif du réseau,
- comparaison de la tension $U_{DC}$ du circuit intermédiaire à une valeur $U_{DClim}$ de seuil et
- début du cadencement à la fréquence de base des interrupteurs à semi-conducteur, si la tension $U_{DC}$ du circuit intermédiaire dépasse la valeur $U_{DClim}$ de seuil ainsi que
- arrêt du cadencement à la fréquence de base des interrupteurs à semi conducteur si la valeur $\overline{I_w}$ moyenne lissée du courant $I_w$ actif du réseau change de signe.

8. Procédé suivant la revendication 7, **caractérisé en ce que**, lorsqu'une valeur de seuil maximum spécifique au circuit du convertisseur est atteinte, on ouvre l'interrupteur ($T_1$, $T_2$, $T_3$, $T_4$, $T_5$, $T_6$) à semi-conducteur concerné et on ne le referme que si le courant s'est amorti suffisamment.

**9.** Convertisseur (1) ayant des interrupteurs ($T_1$, $T_2$, $T_3$, $T_4$, $T_5$, $T_6$) à semi-conducteur pouvant être commandés pour effectuer le procédé suivant l'une des revendications précédentes, comportant

- des moyens de détection et/ou de détermination en continu du sens d'un flux de puissance instantané,
- des moyens de comparaison du sens du flux de puissance détecté ou déterminé à un sens souhaité du flux de puissance, ainsi que
- des moyens pour faire commencer et arrêter le cadencement à la fréquence de base des interrupteurs ($T_1$, $T_2$, $T_3$, $T_4$, $T_5$, $T_6$) à semi-conducteur en fonction du sens souhaité du flux de puissance,
**caractérisé en ce que**
le convertisseur (1) a un système de capteurs de la tension de circuit intermédiaire et du courant de réseau et/ou du courant de circuit intermédiaire et est constitué de manière à cadencer les interrupteurs ($T_1$, $T_2$, $T_3$, $T_4$, $T_5$, $T_6$) à semi-conducteur, en marche à vide ou à une charge du moteur petite, par des signaux de test, qui
- sont compatibles avec le modèle de commutation en fréquence de base en fonctionnement normal,
- réduisent considérablement en marche à vide la puissance apparente nécessaire par rapport au fonctionnement normal,
- si la tension du réseau s'abaisse en marche à vide, appliquent automatiquement la tension de circuit intermédiaire, ainsi que
- en exploitant la puissance apparente restante en marche à vide ou sous une charge de moteur petite, fournissent un critère pour faire commencer le fonctionnement normal à la fréquence de base ou pour y mettre fin.

**10.** Convertisseur suivant la revendication 9, **caractérisé par** des moyens de désactivation de divers interrupteurs à semi-conducteur pendant des plages ($\Phi_1$, ..., $\Phi_2$}) angulaires individuelles limitées d'un angle ($\Phi$) du réseau en marche à vide ou pendant une utilisation petite en moteur.

**11.** Convertisseur suivant la revendication 9 ou 10, **caractérisé en ce que** les interrupteurs à semi-conducteur comprennent des Insulated Gate Bipolar Transistor (IGBTs).

FIG 1

$u_R$

$u_S$

$u_T$

Netzspannung $u_{RS,\ T}$

$L_{Netz}$

$u_{RS,\ Netz}$

$u_{ST,\ Netz}$

$L_C$

$i_R$

$i_S$

$i_T$

3

R

S

T

$u_{RS,\ Umr}$

$u_{ST,\ Umr}$

$D_1$ $T_1$ $D_2$ $T_2$ $D_3$ $T_3$

$D_4$ $T_4$ $D_5$ $T_5$ $T_6$ $D_6$

4

2

$C_{DC}$

$+$

$u_{DC}$

5

1

FIG 2

Zwischenkreisspannung $u_{DC}$-500 V

Netz-Wirkstrom $I_W$

Netz-Phasenspannung $u_R$*0.01

Netz-Blindstrom $I_B$

FIG 3

Zwischenkreisspannung $u_{DC}$-500 V

Netz-Blindstrom $I_B$

Netz-Wirkstrom $I_W$

FIG 4

120°    II    60°

III

T6

180°    T4    T2    I    0°

IV    T3    T1

T5

V    VI

240°    300°

Reduzierter Schaltsektor
bei motorischem Betrieb
von 60° auf $\varnothing_2$
(Einschalten bei $\varnothing_1$)

$\varnothing_2$

$\varnothing_1$

FIG 5

Zwischenkreisspannung $u_{DC}$-530 V

0°    60°

$\Delta U = u_{DC} - u_{Umr, RS}$

Netz-Wirkstrom $I_W$

15°
45°

Netz-Blindstrom $I_B$

Leiterspannung $u_{TR, Umr}$- 530 V

Leiterspannung $u_{ST, Umr}$- 530 V

Leiterspannung $u_{RS, Umr}$- 530 V

## FIG 6

Zwischenkreisspannung $u_{DC}$-530 V

Netz-Wirkstrom $I_W$

0°   60°

$$\Delta U = u_{DC} - u_{Umr, RS}$$

Leiterspannung $u_{RS, Umr}$- 530 V

Leiterspannung $u_{ST, Umr}$- 530 V

Netz-Blindstrom $I_B$

Leiterspannung $u_{TR, Umr}$- 530 V

## FIG 7

Lastsprung

Netz-Wirkstrom $I_W$

Zwischenkreisspannung $u_{DC}$-530 V

Netz-Blindstrom $I_B$

Umschalten auf Standard-Steuerung

# FIG 8

Ausgangszustand
normaler Grundfrequenter Betrieb
(Vollsektor-Betrieb) —10

Einspeisender Betrieb ?
(geglättete Wirkleistung motorisch
und größer als Mindestwert) ? —20

ja

nein

Rückspeisender Betrieb
→ Vollsektor-Betrieb aktivieren —50

Einspeisender Betrieb
→ Teilsektor-Betrieb bzw.
Testsignale aktivieren —30

Wartezeit zur Vermeidung von
Grenzzyklen

60

ja

40

nein

Rückspeisender Betrieb ?
(Momentan-Wirkstrom generatorisch
und größer als Mindestwert) oder
{[(uDC-Anstieg größer als positiver
Mindestwert] und [Wirkstrom kleiner als
motorischer Mindestwert)]} ?

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9917435 A